# FASCICULE DE BREVET EUROPEEN

(11) **EP 3 425 143 B1**
(45) Date de publication et mention de la délivrance du brevet: **25.03.2020**
(21) Numéro de dépôt: 18181971.5
(22) Date de dépôt: 05.07.2018
(51) Int. Cl.: E05B 65/00, A01K 1/00, E05B 65/06, E05C 1/10, E05B 15/02

(54) **GÂCHE POUR VERROU DE FERMETURE DE BARRIÈRE D'ENCLOS**
SCHLIESSBLECH FÜR SCHLOSS ZUM VERSCHLIESSEN EINER ZAUNABSPERRUNG
LATCH FOR ENCLOSURE BARRIER LOCK

(30) Priorité: 05.07.2017 FR 1756336
(43) Date de publication de la demande: 09.01.2019
(73) Titulaire: Tubex, 45300 Escrennes (FR)
(72) Inventeur: JOURDAIN, Dominique, 45300 Escrennes (FR)
(74) Mandataire: Cabinet Beau de Loménie

(56) Documents cités:
- EP-A1- 1 224 371
- US-A- 1 179 852
- US-A- 1 200 260
- US-A- 2 510 520
- US-B1- 7 878 558

## Description

Le présent exposé concerne une barrière d'enclos dont l'ouvrant de barrière étant apte à pivoter d'un premier côté ou d'un deuxième côté du dormant de barrière, plus particulièrement un verrou de fermeture pour une telle barrière et plus particulièrement une gâche pour un tel verrou de fermeture.

Il est connu de l'art antérieur des verrous permettant la fermeture d'un ouvrant de barrière d'enclos dans les deux sens. Ces verrous sont généralement complexes et leur coût de fabrication est élevé. Un exemple d'un tel verrou est divulgué dans le document EP 1224371. Ce document divulgue un verrou comprenant une gâche en V, montée pivotante autour d'un axe vertical passant par la pointe du V, ainsi qu'un bloqueur mobile ayant deux bras de blocage.

Cependant, ces verrous connus de l'art antérieur ne permettent pas d'assurer une sécurité de verrouillage lorsque l'ouvrant de barrière est « claqué ». En effet, une fois le pêne parvenu dans le creux de la gâche, il faut bloquer cette dernière en actionnant des bras bloqueurs. Or, lors de l'entrée ou de la sortie d'animaux de l'enclos, l'utilisateur est souvent amené à « claquer » la barrière de façon à économiser du temps mais également pour des raisons de sécurité lorsqu'il est confronté à des animaux nerveux ou dangereux.

En outre, ces verrous connus ne fonctionnent pas en cas de mauvais réglage de la barrière.

Le document US 1 179 852 divulgue une gâche selon le préambule de la revendication 1.

Le présent exposé a pour but de résoudre tout ou partie des inconvénients mentionnés ci-dessus.

À cet effet, le présent exposé concerne une gâche pour verrou de fermeture d'ouvrant de barrière, l'ouvrant de barrière étant apte à adopter une position de fermeture par rapport à un dormant de barrière et à pivoter d'un premier côté ou d'un deuxième côté du dormant de barrière à partir de la position de fermeture,
la gâche comprenant :
- un organe de verrouillage destiné à coopérer avec un pêne pour retenir l'ouvrant de barrière en position de fermeture,
- un obstacle mobile entre une première position extrême et une deuxième position extrême, dans lesquelles l'obstacle est configuré pour libérer un accès à l'organe de verrouillage depuis le premier ou le deuxième côté du dormant de barrière respectivement, et
   - au moins une lumière de guidage, définissant une course de déplacement de l'obstacle entre la première position extrême et la deuxième position extrême.

Les notions de côté, de direction ou de sens s'apprécient par rapport à l'orientation de la gâche à l'état monté sur le dormant de barrière.

On entend par « l'ouvrant de barrière étant apte à adopter une position de fermeture par rapport à un dormant de barrière et à pivoter d'un premier côté ou d'un deuxième côté du dormant de barrière à partir de la position de fermeture », que l'ouvrant de barrière est apte à pivoter entre la position de fermeture et une première position d'ouverture selon une direction de rotation horaire d'une part, et entre la position de fermeture et une deuxième position d'ouverture selon une direction de rotation antihoraire d'autre part.

Ainsi, l'utilisateur peut fermer l'ouvrant de barrière depuis l'un ou l'autre des côtés de la barrière. L'obstacle permet en outre d'arrêter l'ouvrant, et plus particulièrement le pêne, au niveau de l'organe de verrouillage de façon à ce que le pêne puisse s'insérer dans l'organe de verrouillage. Selon un aspect, l'obstacle subit une translation entre les première et deuxième positions extrêmes. Ainsi, la gâche présente une structure et un fonctionnement simple. En outre, le déplacement en translation de l'obstacle permet d'éviter des mouvements de rappel de l'obstacle dans une position déterminée, ce qui permet de limiter les risques que l'obstacle entrave l'insertion du pêne dans l'organe de verrouillage ou son retrait de l'organe de verrouillage.

On comprend que l'obstacle peut subir une translation selon une trajectoire rectiligne ou bien selon une trajectoire présentant une ou plusieurs courbes.

Selon un aspect, la première position d'ouverture est disposée du premier côté du dormant de barrière et la deuxième position d'ouverture est disposée du deuxième côté du dormant de barrière.

Selon un aspect, l'organe de verrouillage comporte un premier et un deuxième bord de verrouillage, destinés à retenir le pêne dans une position de verrouillage, dans la première position extrême, l'obstacle étant suffisamment éloigné du deuxième bord de verrouillage pour libérer l'accès à l'organe de verrouillage depuis le premier côté du dormant de barrière, et dans la deuxième position extrême, l'obstacle étant suffisamment éloigné du premier bord de verrouillage pour libérer l'accès à l'organe de verrouillage depuis le deuxième côté du dormant de barrière.

Selon un aspect, l'obstacle peut être déplacé vers la première ou la deuxième position extrême de façon à être suffisamment éloigné du deuxième bord de verrouillage ou du premier bord de verrouillage respectivement pour libérer l'accès à l'organe de verrouillage depuis un premier ou d'un deuxième côté du dormant de barrière respectivement.

On entend par « suffisamment éloigné », éloigné d'une distance suffisamment importante pour libérer l'accès du pêne à l'organe de verrouillage. Autrement dit, on entend par « suffisamment éloigné », éloigné d'une distance plus importante que la largeur du pêne, ou d'un élément mobile du pêne.

Selon un aspect, l'obstacle ne comprend pas d'élément de rappel.

Selon un aspect, l'obstacle n'est pas rappelé vers une quelconque position après avoir été déplacé vers l'une des première et deuxième positions extrêmes.

Ainsi, les mouvements de rappel de l'obstacle dans une position déterminée sont évités, ce qui permet de limiter les risques que l'obstacle entrave l'insertion du pêne dans l'organe de verrouillage ou son retrait de l'organe de verrouillage.

Selon un aspect, dans la première position extrême, la surface de l'obstacle dirigée vers le premier côté couvre une portion de l'organe de verrouillage, et au maximum, la surface de l'obstacle dirigée vers le premier côté est alignée avec le premier bord de verrouillage.

Selon un aspect, dans la deuxième position extrême, la surface de l'obstacle dirigée vers le deuxième côté couvre une portion de l'organe de verrouillage, et au maximum, la surface de l'obstacle dirigée vers le deuxième côté est alignée avec le deuxième bord de verrouillage.

Selon un aspect, la gâche comprend une première rampe d'accès du premier côté du dormant de barrière et une deuxième rampe d'accès du deuxième côté du dormant de barrière, les première et deuxième rampes d'accès étant configurées pour permettre l'accès à l'organe de verrouillage. Selon un aspect, les première et deuxième rampes d'accès sont formées par une lame métallique.

Selon un aspect, l'organe de verrouillage comprend un creux ou une ouverture. Selon un aspect, le creux ou l'ouverture est ménagé entre les première et deuxième rampes d'accès. Selon un aspect, le creux ou l'ouverture est réalisé dans la lame métallique.

Selon un aspect, l'organe de verrouillage est disposé en retrait par rapport à l'obstacle.

On entend par « l'organe de verrouillage est disposé en retrait par rapport à l'obstacle », que l'obstacle fait saillie par rapport à l'organe de verrouillage. Autrement dit, à l'état monté sur le dormant de barrière, l'obstacle est plus proche d'un montant formant l'axe de rotation de l'ouvrant de barrière que l'organe de verrouillage. En d'autres termes, l'organe de verrouillage est disposé en retrait par rapport à l'obstacle vu depuis l'ouvrant de la barrière en position de fermeture. Les risques que l'accès à l'organe de verrouillage soit entravé sont limités. En effet, les risques que des éléments extérieurs, tels que des feuilles mortes, s'insèrent dans l'organe de verrouillage sont limités. En outre, cela permet de réduire la fréquence des opérations de maintenance et de nettoyage.

Selon un aspect, les première et deuxième rampes d'accès sont disposées en retrait par rapport aux premier et deuxième bords de verrouillage.

Selon un aspect, les première et deuxième rampes d'accès convergent vers l'organe de verrouillage.

Selon un aspect, les rampes d'accès convergent en direction de l'obstacle. Selon un aspect, à l'état monté de la gâche sur le dormant de la barrière, les rampes d'accès convergent en direction du montant formant l'axe de rotation de l'ouvrant de barrière.

Selon un aspect, les première et deuxième positions extrêmes sont définies par la venue en butée de l'obstacle avec l'une et l'autre des extrémités de la lumière de guidage.

Selon un aspect, l'au moins une lumière de guidage définit une course de déplacement, ou une trajectoire, sensiblement rectiligne, de préférence rectiligne.

Selon un aspect, l'au moins une lumière définit une course de déplacement courbe.

Selon un aspect, l'au moins une lumière de guidage définit une course de déplacement suivant le profil de l'organe de verrouillage, et particulièrement des rampes d'accès à l'organe de verrouillage.

Selon un aspect, la gâche comprend au moins une patte dans laquelle est ménagée l'au moins une lumière de guidage.

Selon un aspect, l'au moins une patte comprend un élément de protection plastique. L'élément de protection permet de couvrir le bord de l'au moins une patte, qui peut être coupant et donc dangereux lors du passage des animaux ou bien de l'utilisateur. L'élément de protection permet donc d'assurer la sécurité des animaux et de l'utilisateur.

Selon un aspect, l'au moins une patte est solidaire de l'organe de verrouillage.

Selon un aspect, l'au moins une patte est formée d'une seule pièce avec l'organe de verrouillage.

Selon un aspect, l'au moins une patte est assemblée à l'organe de verrouillage par tout moyen, par exemple par soudage.

Selon un aspect, l'au moins une patte est solidaire des première et deuxième rampes d'accès.

Selon un aspect, l'au moins une patte est formée d'une seule pièce avec les première et deuxième rampes d'accès.

Selon un aspect, l'au moins une patte est assemblée aux première et deuxième rampes d'accès par tout moyen, par exemple par soudage.

Selon un aspect, l'au moins une patte est fixée aux première et deuxième rampe d'accès par tout moyen, par exemple par soudage ou par collage. Selon un aspect, l'au moins une patte est formée en tout ou partie en une seule pièce avec les première et deuxième rampes d'accès, et plus particulièrement avec la lame métallique.

Selon un aspect, la gâche comprend une première patte et une deuxième patte, les première et deuxième pattes étant disposées face à face.

Selon un aspect, une lumière de guidage étant ménagée dans chacune des première et deuxième pattes, les lumières de guidage étant disposées face à face.

Selon un aspect, les première et deuxième pattes définissent entre elles une zone d'interaction dans laquelle le pêne est configuré pour interagir avec la gâche.

Selon un aspect, l'obstacle comprend une tige s'étendant selon une direction transversale, et de préférence perpendiculaire, par rapport à un plan de l'au moins une lumière de guidage.

Selon un aspect, la tige est métallique.

Selon un aspect, la tige est métallique et recouverte d'une matière plastique. Ainsi, le niveau de bruit lors du verrouillage de la barrière est diminué.

Selon un aspect, la tige traverse l'au moins une lumière de guidage de façon à être guidée le long de la course de déplacement.

Selon un aspect, l'obstacle comprend au moins un élément de retenue, configuré pour retenir la tige traversant la lumière de guidage.

Selon un aspect, l'au moins un élément de retenue comprend une tête de vis. Optionnellement, la tête de vis est formée avec la tige.

Selon un aspect, l'au moins un élément de retenue est un écrou, vissé sur une portion filetée de la tige.

Selon un aspect, l'au moins un élément de retenue est une goupille, un boulon ou un bord serti de la tige si la tige est montée dans la lumière de guidage par sertissage.

Selon un aspect, chaque extrémité de la tige traverse chacune des deux lumières de guidage disposées face à face.

Selon un aspect, un premier élément de retenue comprend une tête de vis et un deuxième élément de retenue comprend un écrou vissé sur une portion filetée de la tige.

Selon un aspect, les premier et deuxième éléments de retenue sont configurés pour être disposés à l'extérieur de la zone d'interaction. En d'autres termes, chacun des premier et deuxième éléments de retenue est disposé en regard d'une surface externe de chacune des première et deuxième pattes. Les première et deuxième pattes comprennent chacune une surface interne, disposées en regard l'une de l'autre et définissant la zone d'interaction.

Selon un aspect, la gâche est solidaire du dormant de barrière.

Selon un aspect, la gâche est formée avec le dormant de barrière.

Selon un aspect, la gâche comprend un organe de fixation configuré pour fixer la gâche au dormant de barrière.

Selon un aspect, l'organe de fixation comprend au moins une portion circulaire configurée pour être disposé autour d'un élément tubulaire du dormant de barrière.

Selon un aspect, les première et deuxième rampes d'accès, et plus particulièrement, la lame métallique, sont fixées à l'organe de fixation ou au dormant de barrière par tout moyen, par exemple par soudage ou par collage.

Selon un aspect, les première et deuxième rampes d'accès, et plus particulièrement, la lame métallique, sont formées en tout ou partie en une seule pièce avec l'organe de fixation ou le dormant de barrière.

Selon un aspect, l'au moins une portion circulaire de l'organe de fixation comprend une partie faisant saillie, et formant les rampes d'accès. Selon un aspect, l'organe de verrouillage et plus particulièrement le creux ou l'ouverture est ménagé dans cette partie.

Selon un aspect, l'organe de fixation comprend un collier de serrage.

Selon un aspect, la portion circulaire est ouverte et comprend en chacune de ses extrémités, une languette de fixation, les languettes de fixation étant fixées l'une à l'autre par un élément de serrage, par exemple une combinaison d'une vis et d'un écrou.

Selon un aspect, l'organe de fixation comprend un premier et un deuxième élément semi-circulaire comprenant chacun deux languettes de fixation en chacune de leurs extrémités.

Selon un aspect, les deux languettes de fixation du premier élément semi-circulaire étant configurées pour venir en face des languettes de fixation du deuxième élément semi-circulaire.

Selon un aspect, les languettes de fixation disposées face à face sont configurées pour être fixées l'une à l'autre par un élément de serrage, par exemple une combinaison d'une vis et d'un écrou.

Le présent exposé se rapporte en outre à un verrou de fermeture d'ouvrant de barrière, l'ouvrant de barrière étant apte à adopter une position de fermeture par rapport à un dormant de barrière et à pivoter d'un premier côté ou d'un deuxième côté du dormant de barrière à partir de la position de fermeture, le verrou de fermeture comprenant :
- une gâche conforme à l'une quelconque des caractéristiques susmentionnées ;
- un pêne configuré pour coopérer avec la gâche lorsque la barrière occupe la position de fermeture, le pêne étant configuré pour solliciter l'obstacle vers la première ou la deuxième position extrême de façon à libérer l'accès à l'organe de verrouillage depuis le premier ou le deuxième côté du dormant de barrière respectivement.

Autrement dit, le pêne est configuré pour déplacer l'obstacle vers la première position extrême lorsque la barrière passe de la première position d'ouverture à la position de fermeture et pour déplacer l'obstacle vers la deuxième position extrême lorsque la barrière passe de la deuxième position d'ouverture à la position de fermeture.

Ainsi, l'utilisateur peut fermer l'ouvrant de barrière depuis un côté ou l'autre de la barrière. L'obstacle permet en outre d'arrêter l'ouvrant, et plus particulièrement le pêne, au niveau de l'organe de verrouillage de façon à ce que le pêne puisse s'insérer dans l'organe de verrouillage.

Selon un aspect, le pêne est solidaire de l'ouvrant de barrière.

Selon un aspect, le pêne comprend un élément mobile, apte à occuper une position déployée et une position rétractée, le pêne comprenant en outre un élément de rappel configuré pour rappeler l'élément mobile vers la position déployée, de façon à verrouiller l'ouvrant de barrière en position de fermeture lorsque le pêne atteint l'organe de verrouillage. Ces dispositions permettent une ouverture simplifiée de la barrière. En effet, il suffit de déplacer un élément mobile du pêne dans une position rétractée pour pouvoir ouvrir l'ouvrant d'un côté ou de l'autre. En outre, l'ouverture de la barrière peut être réalisée d'une seule main.

Selon un aspect, le pêne comprend un châssis dans lequel l'élément mobile est introduit. Le châssis est configuré pour guider l'élément mobile en translation entre la position déployée et la position rétractée.

Selon un aspect, l'élément mobile est de forme allongée.

Selon un aspect, l'élément mobile est disposé dans le châssis contre l'élément de rappel.

Selon un aspect, le pêne comprend en outre une poignée, solidaire de l'élément mobile, permettant l'ouverture de l'ouvrant de barrière. Ainsi, l'ouverture de la barrière est simplifiée. En effet, l'ouverture de la barrière peut être réalisée d'une seule main.

Selon un aspect, le châssis comprend un élément de guidage de la poignée en translation lors du mouvement de l'élément mobile, par exemple, une fente. La poignée est destinée à être actionnée par un utilisateur, de façon à faire passer l'élément mobile de la position déployée à la position rétractée afin de déverrouiller l'ouvrant de barrière de la position de fermeture.

Selon un aspect, l'élément mobile est configuré pour glisser le long de la première ou de la deuxième rampe d'accès de l'ouvrant de barrière, se déplaçant ainsi de la position déployée vers la position rétractée lorsque l'ouvrant de barrière se rapproche de la position de fermeture.

Le présent exposé se rapporte en outre à une barrière comprenant un dormant de barrière et un ouvrant de barrière, l'ouvrant de barrière étant apte à adopter une position de fermeture par rapport à un dormant de barrière et à pivoter d'un premier côté ou d'un deuxième côté du dormant de barrière à partir de la position de fermeture, comprenant un verrou de fermeture de l'ouvrant de barrière selon l'une quelconque des caractéristiques susmentionnées.

Selon un aspect, l'ouvrant de barrière est monté pivotant autour d'un axe de rotation.

Selon un aspect, l'axe de rotation de l'ouvrant de barrière est un montant du dormant de barrière.

Selon un aspect, la gâche est métallique. Plus particulièrement l'obstacle, les première et deuxième rampes d'accès, l'organe de verrouillage, les première et deuxième pattes et l'organe de fixation sont métalliques. Selon un aspect, le verrou est métallique.

Le présent exposé et ses avantages seront mieux compris à la lecture de la description détaillée qui suit, de modes de réalisation de l'invention donnés à titre d'exemples non limitatifs. Cette description se réfère aux dessins annexés, sur lesquels :
- la figure 1 représente partiellement une barrière pour enclos avec un ouvrant de barrière ainsi que deux montants formant une partie du dormant de barrière ;
- la figure 2 représente un verrou de fermeture équipant une telle barrière, dans une situation dans laquelle l'ouvrant de barrière est ouvert d'un premier côté ;
- les figures 3A et 3B représentent le verrou de fermeture dans une position de verrouillage, dans une situation dans laquelle l'ouvrant de barrière est en position de fermeture ;
- la figure 4 est une vue en perspective d'une gâche de ce verrou de fermeture dans une situation dans laquelle l'obstacle est en position intermédiaire ;
- la figure 5 est une vue analogue à la figure 4, dans une situation dans laquelle l'obstacle occupe la première position extrême ;
- la figure 6 est une vue analogue aux figures 4 et 5, dans une situation dans laquelle l'obstacle occupe la deuxième position extrême ;
- la figure 7 représente le verrou de fermeture, dans une situation dans laquelle l'élément mobile du pêne glisse sur la première rampe d'accès à l'organe de verrouillage de la gâche ;
- la figure 8 est une vue analogue à la figure 7, dans une situation dans laquelle l'élément mobile du pêne glisse sur la première rampe d'accès à l'organe de verrouillage de la gâche ; et
- la figure 9 est une vue analogue aux figures 7 et 8, dans une situation dans laquelle l'élément mobile du pêne est en position rétractée.

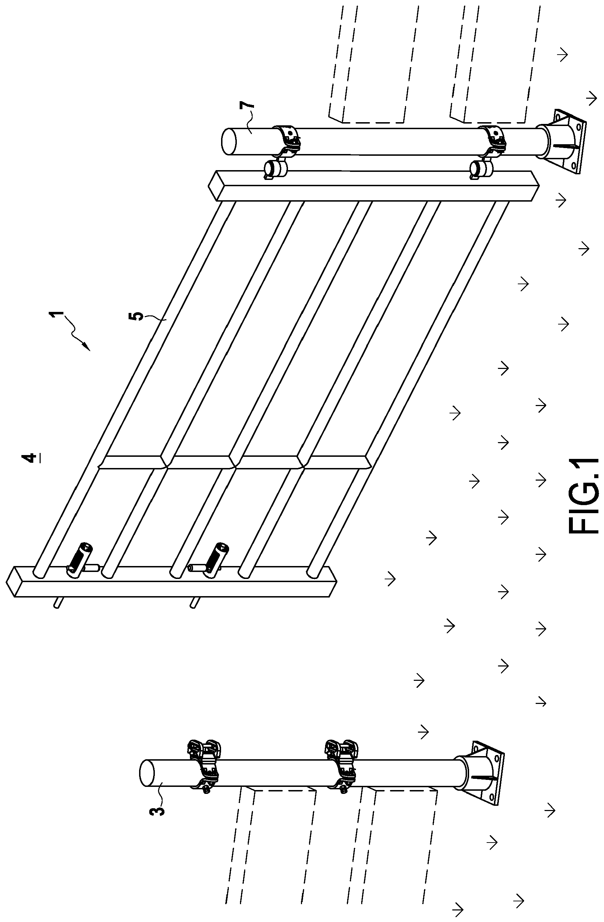

La figure 1 représente une barrière 1 pour enclos comprenant un dormant de barrière 3 et un ouvrant de barrière 5.

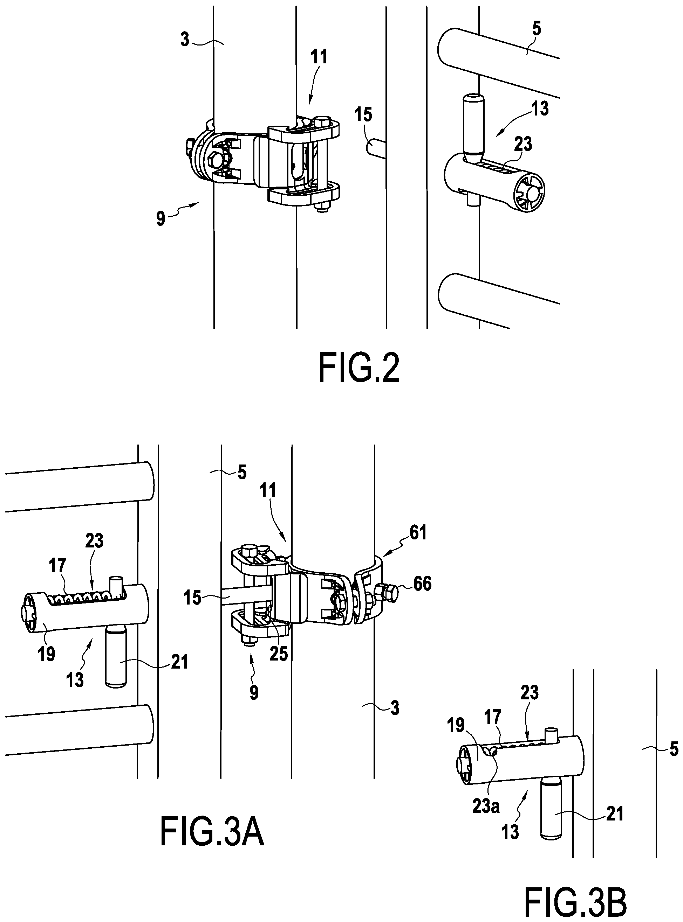

L'ouvrant de barrière 5 est apte à adopter une position de fermeture par rapport au dormant de barrière 3 et à pivoter d'un premier côté 4 ou d'un deuxième côté 6 du dormant de barrière 3 à partir de la position de fermeture. Autrement dit, l'ouvrant de barrière 5 est apte à pivoter entre la position de fermeture, représentée en figure 3A, et une première position d'ouverture, représentée en figure 2, selon une direction de rotation horaire d'une part, et entre la position de fermeture et une deuxième position d'ouverture selon une direction de rotation antihoraire d'autre part. La première position d'ouverture est située d'un premier côté 4 du dormant de barrière 3 et la deuxième position d'ouverture est située d'un deuxième côté 6 du dormant de barrière3.

L'ouvrant de barrière 5 est monté pivotant autour d'un axe de rotation 7 de l'ouvrant de barrière 5.

La barrière 1 comprend en outre un verrou de fermeture 9 de l'ouvrant de barrière 5, représenté en figures 2 et 3.

Le verrou de fermeture 9 comprend une gâche 11 et un pêne 13 configuré pour coopérer avec la gâche 11 lorsque la barrière 1 occupe la position de fermeture.

Le pêne 13 est solidaire de l'ouvrant de barrière 5 et la gâche 11 est solidaire du dormant de barrière 3.

Le pêne 13 comprend un élément mobile 15, apte à occuper une position déployée et une position rétractée. L'élément mobile est de forme allongée et tubulaire. Le pêne 13 comprend également un élément de rappel 17 configuré pour rappeler l'élément mobile 15 vers la position déployée.

Le pêne 13 comprend un châssis 19 dans lequel l'élément mobile 15 est introduit. Le châssis 19 est configuré pour guider l'élément mobile 15 en translation entre la position déployée et la position rétractée. L'élément mobile 15 est disposé dans le châssis 19 contre l'élément de rappel 17.

Le pêne 13 comprend en outre une poignée 21, solidaire de l'élément mobile 15, permettant l'ouverture de l'ouvrant de barrière 5. Par exemple, la poignée 21 est vissée sur l'élément mobile 15. Le châssis 19 comprend une première fente 23, et une deuxième fente, opposée à la première fente. La deuxième fente et/ou la première fente 23 sont configurées pour guider la poignée 21 en translation lors du mouvement de l'élément mobile 15 entre la position rétractée et la position déployée. La première fente 23 permet également le montage de l'élément de rappel 17. La poignée 21 est destinée à être actionnée par un utilisateur, de façon à faire passer l'élément mobile 15 de la position déployée à la position rétractée de manière à déverrouiller l'ouvrant de barrière 5 de la position de fermeture. Les première et deuxième fentes comprennent en outre une ouverture de maintien 23a décalée par rapport à la course de la poignée 21, constituant une butée de maintien en position rétractée de l'élément mobile 15, comme visible sur la figure 3B.

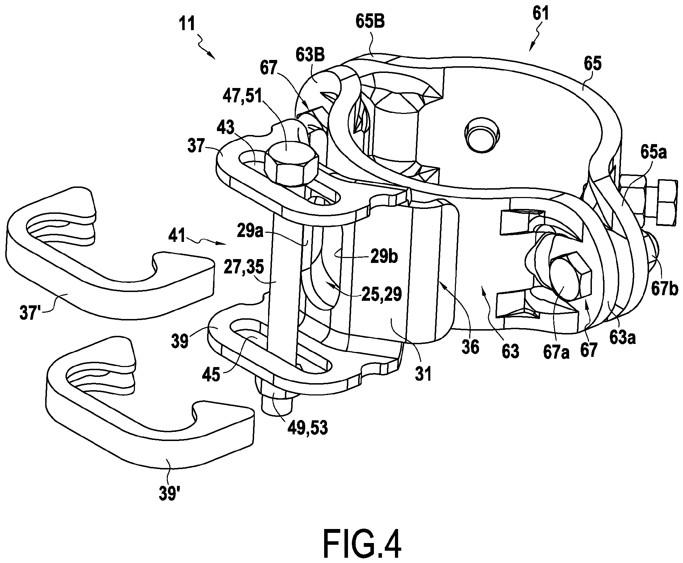

La gâche 11 est représentée en figure 4, 5 et 6. La gâche 11 comprend un organe de verrouillage 25 destiné à coopérer avec le pêne 13 lorsque l'ouvrant de barrière 5 est en position de fermeture. Dans le mode de réalisation représenté, l'organe de verrouillage 25 comprend une ouverture 29. Dans d'autres modes de réalisation, l'organe de verrouillage 25 pourrait comprendre un creux à la place de l'ouverture. L'ouverture 29 comporte un premier et un deuxième bord de verrouillage 29a, 29b configurés pour retenir le pêne 13 dans une position de verrouillage.

La gâche 11 comprend en outre une première rampe d'accès 31 du premier côté 4 du dormant de barrière 3 et une deuxième rampe d'accès 33 du deuxième côté 6 du dormant de barrière 3. Les première et deuxième rampes d'accès 31, 33 sont configurées pour permettre l'accès à l'ouverture 29. L'ouverture 29 est ménagée entre les première et deuxième rampes d'accès 31, 33. Dans le mode de réalisation représenté, l'ouverture 29 est disposée en retrait par rapport à l'obstacle 27. Les première et deuxième rampes d'accès 31, 33 sont disposées en retrait par rapport aux premier et deuxième bords de verrouillage 29a, 29b. Les première et deuxième rampes d'accès convergent vers l'ouverture 29.

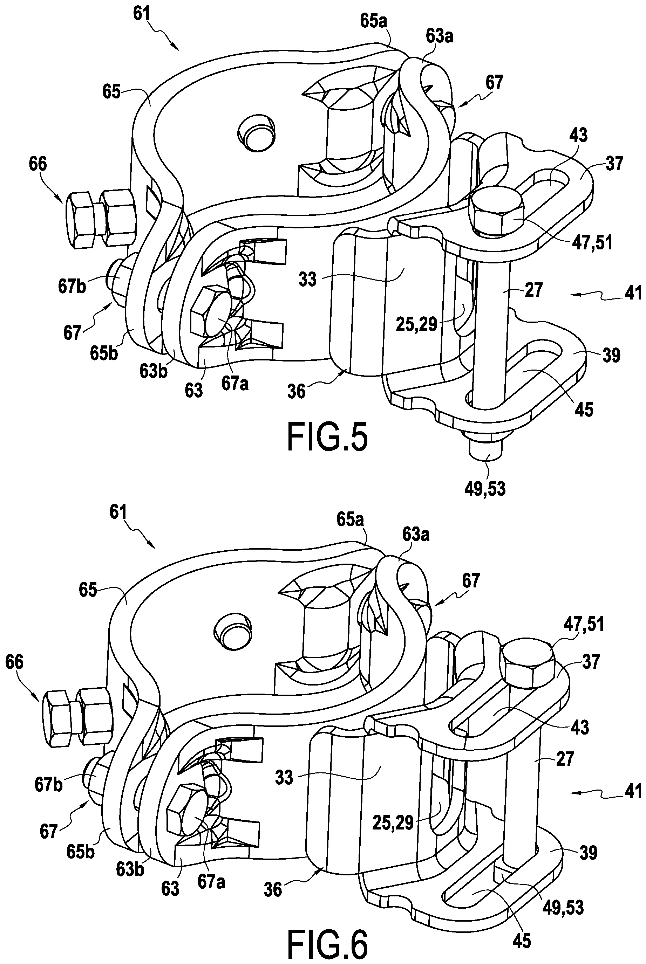

La gâche 11 comprend également un obstacle 27 mobile entre une première position extrême, représentée en figure 5, et une deuxième position extrême, représentée en figure 6, dans lesquelles l'obstacle 27 est configuré pour libérer un accès à l'ouverture 29 depuis le premier ou le deuxième côté 4, 6 du dormant de barrière 3 respectivement.

L'obstacle 27 comprend une tige 35 s'étendant selon une direction verticale lorsque la barrière 1 est en fonctionnement. La tige 35 est de forme allongée et tubulaire. Dans d'autres modes de réalisation, la section de la tige 35 pourrait être de toute autre forme, par exemple carrée.

La gâche 11 comprend en outre une première patte 37 et une deuxième patte 39 disposées face à face. Les première et deuxième pattes 37, 39 peuvent comprendre un premier élément de protection 37' et un deuxième élément de protection 39' respectivement. Les premier et deuxième éléments de protection 37', 39' permettent de couvrir les bords des première et deuxième pattes 37, 39 qui peuvent être coupants et donc dangereux lors du passage des animaux ou bien de l'utilisateur. Les premier et deuxième éléments de protection 37', 39' permettent donc d'assurer la sécurité des animaux et de l'utilisateur. Les premier et deuxième éléments de protection 37', 39' sont par exemple en plastique. La première patte 37 est disposée au-dessus de la deuxième patte 39, lorsque la barrière 1 est en fonctionnement. Les première et deuxième pattes 37, 39 définissent entre elles une zone d'interaction 41 dans laquelle est reçu le pêne 13 lorsqu'il interagit avec la gâche 11. Dans le mode de réalisation représenté, les première et deuxième pattes 37, 39 sont solidaires de l'organe de verrouillage 25. Dans le mode de réalisation représenté, les première et deuxième pattes 37, 39 et l'organe de verrouillage 25 sont formés d'une seule pièce. Dans d'autres modes de réalisation, les première et deuxième pattes 37, 39 pourraient être assemblées à l'organe de verrouillage 25 par tout moyen, par exemple par soudage.

La gâche 11 comprend une lumière de guidage 43, 45 ménagée dans chacune des deux pattes 37, 39. Les lumières de guidage 43, 45 se font face et définissent la course de déplacement de la tige 35 entre la première position extrême et la deuxième position extrême, les première et deuxième positions extrêmes étant définies par la venue en butée de la tige 35 avec l'une et l'autre des extrémités respectives de ces lumières de guidage 43, 45. La tige 35 traverse les lumières de guidage 43, 45 de façon à être guidée le long de la course de déplacement. Dans le mode de réalisation représenté, les lumières de guidage 43, 45 définissent une course de déplacement sensiblement rectiligne. Dans d'autres modes de réalisation, les lumières de guidage pourraient définir une course de déplacement courbe ou une course de déplacement suivant le profil des rampes d'accès 31, 33 à l'ouverture 29.

L'ouverture 29 est disposée en retrait par rapport à l'obstacle 27, vu depuis l'ouvrant de la barrière 5 en position de fermeture.

La tige 35 s'étend selon une direction transversale, et de préférence perpendiculaire, par rapport aux plans définis par les lumières de guidage 43, 45.

L'obstacle 27 comprend en outre un premier élément de retenue 47 et un deuxième élément de retenue 49, configurés pour retenir la tige 35 traversant les lumières de guidage 43, 45 selon la direction verticale. Dans le mode de réalisation représenté, le premier élément de retenue 47 comprend une tête de vis 51. La tête de vis 51 est formée avec la tige 35. Un deuxième élément de retenue 49 comprend un écrou 53, vissé sur une portion filetée de la tige 35. Selon d'autres modes de réalisation, le premier élément de retenue 47 et/ou le deuxième élément de retenue 49 peuvent être une goupille, un boulon ou un bord serti de la tige 35 si la tige 35 est montée dans les lumières de guidage 43, 45 par sertissage.

Les premier et deuxième éléments de retenue 47, 49 sont configurés pour être disposés à l'extérieur de la zone d'interaction 41. En d'autres termes, chacun des premier et deuxième éléments de retenue 47, 49 est disposé en regard d'une surface externe 37a, 39a de chacune des première et deuxième pattes 37, 39. Les première et deuxième pattes 37, 39 comprennent également chacune une surface interne 37b, 39b, les surfaces internes 37b, 39b étant disposées en regard l'une de l'autre et définissant la zone d'interaction 41. La surface interne 37b et la surface externe 37a de la première patte 37 sont opposées. La surface interne 39b et la surface externe 39a de la deuxième patte 39 sont opposées.

La gâche 11 comprend un organe de fixation 61 configuré pour fixer la gâche 11 au dormant de barrière 3. Le dormant de barrière 3 comprend un montant tubulaire dans le mode de réalisation représenté. La gâche 11 est fixée au dormant de barrière 3 par un collier de serrage. En effet, l'organe de fixation 61 comprend un premier élément semi-circulaire 63 et un deuxième élément semi-circulaire 65. Les première et deuxième rampes d'accès 31, 33, l'organe de verrouillage 25, les première et deuxième pattes 37, 39 et l'obstacle 27 sont fixés au premier élément semi-circulaire 63.

Dans le mode de réalisation représenté, les première et deuxième rampes d'accès 31, 33 sont formées par une lame métallique 36. L'organe de verrouillage 25 est formé par l'ouverture 29 ménagée dans la lame métallique 36. La lame métallique 36 est fixée à l'organe de fixation 61 et plus particulièrement au premier élément semi-circulaire 63 par tout moyen tel que par soudage ou par collage. La lame métallique 36 peut également être formée en tout ou partie en une seule pièce avec l'organe de fixation 61 et plus particulièrement le premier élément semi-circulaire 63. Enfin, le premier élément semi-circulaire 63 pourrait comprendre une partie faisant saillie, et formant les première et deuxième rampes d'accès 13, 33. Dans ce cas, l'ouverture 29 est ménagée dans cette partie.

Dans le mode de réalisation représenté, les première et deuxième pattes 37, 39 sont fixées à la lame métallique 36. Les première et deuxième pattes 37, 39 peuvent être fixées à la lame métallique 36 par tout moyen tel que par soudage ou par collage. Les première et deuxième pattes 37, 39 pourraient également être formées en tout ou partie en une seule pièce avec la lame métallique 36 ou avec l'organe de fixation 61.

Le premier élément semi-circulaire 63 comprend deux languettes de fixation 63a, 63b en chacune de ses extrémités. Le deuxième élément semi-circulaire 65 comprend deux languettes de fixation 65a, 65b en chacune de ses extrémités. Les deux languettes de fixation 63a, 63b du premier élément semi-circulaire 63 sont configurées pour venir en face des languettes de fixation 65a, 65b du deuxième élément semi-circulaire. Les languettes de fixation 63a, 63b, 65a, 65b comprennent une ouverture configurés pour accueillir un élément de serrage 67 par paire de languettes de fixation 63a, 65a et 63b, 65b. Les paires de languettes de fixation 63a, 65a et 63b, 65b disposées face à face sont fixées l'une à l'autre par l'élément de serrage 67. Dans le mode de réalisation représenté, l'élément de serrage 67 est une combinaison d'une vis 67a et d'un écrou 67b. Il doit toutefois être entendu que la gâche 11 pourrait être fixée au dormant de barrière 3 par tout autre moyen, par exemple par soudage, ou bien être formée en tout ou partie en une seule pièce avec une partie du dormant de barrière 3, telle qu'un montant.

L'organe de fixation 61 comprend en outre une vis de serrage 66 contre le dormant de barrière 3, la vis de serrage 66 traversant une ouverture ménagée dans le deuxième élément semi-circulaire 65 pour venir contre le dormant de barrière 3.

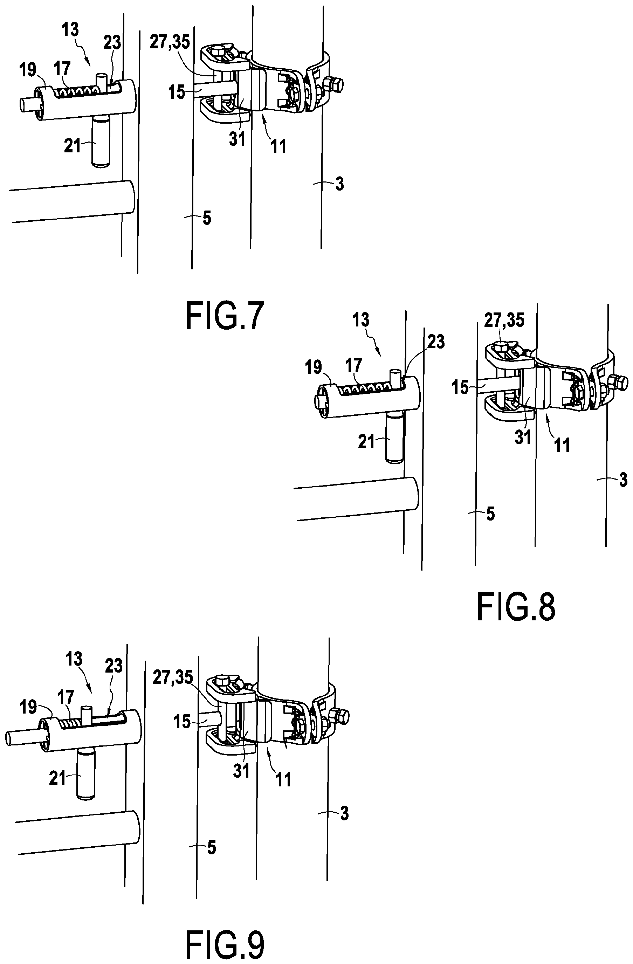

Comme représenté en figures 7 à 9, le pêne 13 est configuré pour solliciter l'obstacle 27 et pour le déplacer vers la première position extrême lorsque l'ouvrant de barrière 5 passe de la première position d'ouverture à la position de fermeture et pour déplacer l'obstacle 27 vers la deuxième position extrême lorsque l'ouvrant de barrière 5 passe de la deuxième position d'ouverture à la position de fermeture.

L'obstacle 27 est configuré pour être déplacé vers la première ou la deuxième position extrême de façon à être suffisamment éloigné du deuxième bord de verrouillage 29a ou du premier bord de verrouillage 29b respectivement, pour libérer l'accès à l'ouverture 29 depuis un premier ou d'un deuxième côté 4, 6 du dormant de barrière 3 respectivement.

En effet, l'obstacle 27 doit être éloigné d'une distance suffisamment importante du premier ou du deuxième bord de verrouillage 35, 37, en fonction du sens dans lequel l'ouvrant de barrière a été ouvert pour libérer l'accès du pêne 13 à l'ouverture 29. La distance doit donc être plus importante que le diamètre de l'élément mobile 15.

Dans la première position extrême, la surface de la tige 35 dirigée vers le premier côté 4 couvre une portion de l'ouverture 29, et au maximum, la surface de la tige 35 dirigée vers le premier côté 4 est alignée avec le premier bord de verrouillage 29a.

Dans la deuxième position extrême, la surface de la tige 35 dirigée vers le deuxième côté 6 couvre une portion de l'ouverture 29, et au maximum, la surface de la tige 35 dirigée vers le deuxième côté 6 est alignée avec le deuxième bord de verrouillage 29b.

La fermeture de la barrière est représentée en figure 7 et 8 plus particulièrement. Lorsque l'utilisateur ferme l'ouvrant de barrière depuis le premier côté, l'élément mobile 15 du pêne 13 glisse le long de la première rampe d'accès 31. L'élément mobile 15 se rétracte d'une distance correspondant à la hauteur de la première rampe d'accès 31. Lorsque l'élément mobile atteint l'ouverture 29, l'élément de rappel 17 rappelle l'élément mobile 15 vers la position déployée et l'élément mobile 15 s'engage dans l'ouverture 29 dans la position de verrouillage. Lorsque l'obstacle 27 est sur la trajectoire du pêne 13 avant que celui-ci ne puisse s'introduire dans l'ouverture 29, le pêne 13 entre en contact avec l'obstacle 27 et le pousse en direction de la première position extrême jusqu'à ce que l'obstacle 27 soit suffisamment éloigné du deuxième bord de verrouillage 29b pour que l'élément mobile 15 puisse s'introduire dans l'ouverture 29.

Il est possible que l'obstacle 27 occupe déjà une position suffisamment éloignée du deuxième bord de verrouillage 29b lors de la fermeture de l'ouvrant de barrière 5, par exemple dans le cas où l'ouvrant de barrière 5 avait déjà été fermé depuis le premier côté 4 lors de la précédente fermeture. Dans ce cas, le pêne 13 ne pousse pas nécessairement l'obstacle 27.

Lorsque l'ouvrant de barrière 5 est refermé par l'utilisateur avec force, autrement dit lorsque l'utilisateur claque l'ouvrant de barrière 5, la vitesse de l'ouvrant de barrière 5 empêche l'élément mobile 15 de s'introduire dans l'ouverture 29 dès que l'obstacle 27 est suffisamment éloigné du deuxième bord de verrouillage 29b. Le pêne 13 pousse alors l'obstacle 27 jusqu'à la première position extrême. Dans la première position extrême, l'obstacle 27 arrête la trajectoire du pêne 13 permettant à l'élément mobile 15 de s'introduire dans l'ouverture 29 et ainsi de verrouiller l'ouvrant de barrière 5 en position de fermeture, comme représenté en figures 3A et 3B.

Il est possible que l'obstacle 27 occupe déjà la première position extrême lors de la fermeture de l'ouvrant de barrière 5, notamment dans le cas où l'ouvrant de barrière 5 avait déjà été claqué depuis le premier côté 4 lors de la précédente fermeture. Dans ce cas, le pêne 13 ne pousse pas l'obstacle 27, mais vient buter contre l'obstacle 27 occupant la première position extrême. L'obstacle 27 arrête alors la trajectoire du pêne 13 de façon à ce que l'élément mobile 15 puisse s'introduire dans l'ouverture 29 et ainsi verrouiller l'ouvrant de barrière 5 en position de fermeture, comme représenté en figures 3A et 3B.

La fermeture de la barrière 1 depuis le deuxième côté 6 est réalisée de la même manière : il convient d'inverser les termes « premier » ou « première » et « deuxième ».

L'ouverture de la barrière 1 est représentée en figure 9. L'utilisateur actionne la poignée 21 de façon à faire passer l'élément mobile 15 de la position déployée à la position rétractée. En position rétractée, l'élément mobile 15 peut franchir l'obstacle 27 et l'utilisateur peut ouvrit la barrière du premier côté 4 ou du deuxième côté 6.

Bien que la présente invention ait été décrite en se référant à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels, sans sortir du cadre de l'invention défini par les revendications annexées. Par conséquent, la description et les dessins doivent être considérés dans un sens illustratif plutôt que restrictif.

## Revendications

1. Gâche (11) pour verrou de fermeture (9) d'ouvrant de barrière (5), l'ouvrant de barrière (5) étant apte à adopter une position de fermeture par rapport à un dormant de barrière (3) et à pivoter d'un premier côté (4) ou d'un deuxième côté (6) du dormant de barrière (3) à partir de la position de fermeture,
la gâche (11) comprenant :
- un organe de verrouillage (25) destiné à coopérer avec un pêne (13) pour retenir l'ouvrant de barrière (5) en position de fermeture,
- un obstacle (27) mobile entre une première position extrême et une deuxième position extrême, dans lesquelles l'obstacle (27) est configuré pour libérer un accès à l'organe de verrouillage (25) depuis le premier ou le deuxième côté (4, 6) du dormant de barrière (3) respectivement,
**caractérisée en ce qu'**elle comprend au moins une lumière de guidage (43, 45), définissant une course de déplacement de l'obstacle (27) entre la première position extrême et la deuxième position extrême.

2. Gâche selon la revendication 1, dans laquelle l'organe de verrouillage (25) comporte un premier et un deuxième bord de verrouillage (29a, 29b), destinés à retenir le pêne (13) dans une position de verrouillage,
dans la première position extrême, l'obstacle (27) étant suffisamment éloigné du deuxième bord de verrouillage (29b) pour libérer l'accès à l'organe de verrouillage (25) depuis le premier côté (4, 6) du dormant de barrière (3), et
dans la deuxième position extrême, l'obstacle (27) étant suffisamment éloigné du premier bord de verrouillage (29a) pour libérer l'accès à l'organe de verrouillage (25) depuis le deuxième côté (4, 6) du dormant de barrière (3).

3. Gâche selon l'une des revendications 1 ou 2, comprenant une première rampe d'accès (31) du premier côté (4) du dormant de barrière (3) et une deuxième rampe d'accès (33) du deuxième côté (6) du dormant de barrière (3), les première et deuxième rampes d'accès (31, 33) étant configurées pour permettre l'accès à l'organe de verrouillage (25).

4. Gâche selon l'une quelconque des revendications 1 à 3, dans laquelle l'obstacle (27) comprend une tige (35) s'étendant selon une direction transversale, et de préférence perpendiculaire, par rapport à un plan de l'au moins une lumière de guidage (43, 45).

5. Gâche selon la revendication 4, dans laquelle l'obstacle (27) comprend au moins un élément de retenue (47, 49), configuré pour retenir la tige (35) traversant l'au moins une lumière de guidage (43,45).

6. Verrou de fermeture (9) d'ouvrant de barrière (5), l'ouvrant de barrière (5) étant apte à adopter une position de fermeture par rapport à un dormant de barrière (3) et à pivoter d'un premier côté (4) ou d'un deuxième côté (6) du dormant de barrière (3) à partir de la position de fermeture,
le verrou de fermeture (9) comprenant :
- une gâche (11) conforme à l'une quelconque des revendications 1 à 5;
- un pêne (13) configuré pour coopérer avec la gâche (11) pour retenir l'ouvrant de barrière (5) en position de fermeture, le pêne (13) étant configuré pour solliciter l'obstacle (27) vers la première ou la deuxième position extrême de façon à libérer l'accès à l'organe de verrouillage (25) depuis le premier ou le deuxième côté (4, 6) du dormant de barrière (3) respectivement.

7. Verrou de fermeture selon la revendication 6, dans lequel le pêne (13) comprend un élément mobile (15), apte à occuper une position déployée et une position rétractée, le pêne (13) comprenant en outre un élément de rappel (17) configuré pour rappeler l'élément mobile (15) vers la position déployée, de façon à verrouiller l'ouvrant de barrière (5) en position de fermeture lorsque le pêne (13) atteint l'organe de verrouillage (25).

8. Verrou de fermeture selon la revendication 7, dans lequel l'élément mobile (15) est configuré pour glisser le long de la première ou de la deuxième rampe d'accès (31, 33) de la gâche (11), se déplaçant ainsi de la position déployée vers la position rétractée lorsque l'ouvrant de barrière (5) se rapproche de la position de fermeture.

9. Barrière (1) comprenant un dormant de barrière (3) et un ouvrant de barrière (5), l'ouvrant de barrière (5) étant apte à adopter une position de fermeture par rapport à un dormant de barrière (3) et à pivoter d'un premier côté (4) ou d'un deuxième côté (6) du dormant de barrière (3) à partir de la position de fermeture, la barrière comprenant un verrou de fermeture (9) de l'ouvrant de barrière (5) selon l'une quelconque des revendications 6 à 8.

## Patentansprüche

1. Schließblech (11) für ein Schloss zum Verschließen (9) eines Absperrungsflügels (5), wobei der Absperrungsflügel (5) geeignet ist, eine in Bezug auf eine Absperrungszarge (3) geschlossene Stellung anzunehmen und ausgehend von der geschlossenen Stellung auf eine erste Seite (4) oder auf eine zweite Seite (6) der Absperrungszarge (3) zu schwenken,
wobei das Schließblech (11) umfasst:
- ein Verriegelungsorgan (25), das dazu bestimmt ist, mit einem Riegel (13) zusammenzuwirken, um den Absperrungsflügel (5) in der geschlossenen Stellung zurückzuhalten,
- ein Hindernis (27), das zwischen einer ersten Endstellung und einer zweiten Endstellung beweglich ist, in denen das Hindernis (27) dazu ausgestaltet ist, einen Zugang zu dem Verriegelungsorgan (25) von der ersten beziehungsweise der zweiten Seite (4, 6) der Absperrungszarge (3) freizugeben,
**dadurch gekennzeichnet, dass** es mindestens einen Führungsschlitz (43, 45) umfasst, der einen Verlagerungsweg des Hindernisses (27) zwischen der ersten Endstellung und der zweiten Endstellung definiert.

2. Schließblech nach Anspruch 1, wobei das Verriegelungsorgan (25) einen ersten und einen zweiten Verriegelungsrand (29a, 29b) beinhaltet, die dazu bestimmt sind, den Riegel (13) in einer Verriegelungsstellung zurückzuhalten,
wobei das Hindernis (27) in der ersten Endstellung ausreichend weit von dem zweiten Verriegelungsrand (29b) entfernt ist, um den Zugang zu dem Verriegelungsorgan (25) von der ersten Seite (4, 6) der Absperrungszarge (3) freizugeben, und
wobei das Hindernis (27) in der zweiten Endstellung ausreichend weit von dem ersten Verriegelungsrand (29a) entfernt ist, um den Zugang zu dem Verriegelungsorgan (25) von der zweiten Seite (4, 6) der Absperrungszarge (3) freizugeben.

3. Schließblech nach einem der Ansprüche 1 oder 2, das eine erste Zugangsrampe (31) von der ersten Seite (4) der Absperrungszarge (3) und eine zweite Zugangsrampe (33) von der zweiten Seite (6) der Absperrungszarge (3) umfasst, wobei die erste und zweite Zugangsrampe (31, 33) dazu ausgestaltet sind, den Zugang zu dem Verriegelungsorgan (25) zuzulassen.

4. Schließblech nach einem der Ansprüche 1 bis 3, wobei das Hindernis (27) eine Stange (35) umfasst, die sich gemäß einer Querrichtung und vorzugsweise senkrecht in Bezug auf eine Ebene von dem mindestens einen Führungsschlitz (43, 45) erstreckt.

5. Schließblech nach Anspruch 4, wobei das Hindernis (27) mindestens ein Rückhalteelement (47, 49) umfasst, das dazu ausgestaltet ist, die Stange (35), die den mindestens einen Führungsschlitz (43, 45) durchquert, zurückzuhalten.

6. Schloss zum Verschließen (9) eines Absperrungsflügels (5), wobei der Absperrungsflügel (5) geeignet ist, eine in Bezug auf eine Absperrungszarge (3) geschlossene Stellung anzunehmen und ausgehend von der geschlossenen Stellung auf eine erste Seite (4) oder auf eine zweite Seite (6) der Absperrungszarge (3) zu schwenken,
wobei das Schloss zum Verschließen (9) umfasst:
- ein Schließblech (11) nach einem der Ansprüche 1 bis 5,
- einen Riegel (13), der dazu ausgestaltet ist, mit dem Schließblech (11) zusammenzuwirken, um den Absperrungsflügel (5) in der geschlossenen Stellung zurückzuhalten, wobei der Riegel (13) dazu ausgestaltet ist, das Hindernis (27) derart hin zu der ersten oder der zweiten Endstellung zu beanspruchen, dass der Zugang zu dem Verriegelungsorgan (25) von der ersten beziehungsweise der zweiten Seite (4, 6) der Absperrungszarge (3) freigegeben wird.

7. Schloss zum Verschließen nach Anspruch 6, wobei der Riegel (13) ein bewegliches Element (15) umfasst, das geeignet ist, eine ausgefahrene und eine eingezogene Stellung einzunehmen, wobei der Riegel (13) ferner ein Rückstellelement (17) umfasst, das dazu ausgestaltet ist, das bewegliche Element (15) derart hin zu der ausgefahrenen Stellung zurückzustellen, dass der Absperrungsflügel (5) in der geschlossenen Stellung verriegelt wird, wenn der Riegel (13) das Verriegelungsorgan (25) erreicht.

8. Schloss zum Verriegeln nach Anspruch 7, wobei das bewegliche Element (15) dazu ausgestaltet ist, entlang der ersten oder der zweiten Zugangsrampe (31, 33) des Schließblechs (11) zu gleiten, wobei es sich so von der ausgefahrenen Stellung hin zu der eingezogenen Stellung verlagert, wenn der Absperrungsflügel (5) sich an die geschlossene Stellung annähert.

9. Absperrung (1), die eine Absperrungszarge (3) und einen Absperrungsflügel (5) umfasst, wobei der Absperrungsflügel (5) geeignet ist, eine in Bezug auf eine Absperrungszarge (3) geschlossene Stellung anzunehmen und ausgehend von der geschlossenen Stellung auf eine erste Seite (4) oder auf eine zweite Seite (6) der Absperrungszarge (3) zu schwenken, wobei die Absperrung ein Schloss zum Verschließen (9) des Absperrungsflügels (5) nach einem der Ansprüche 6 bis 8 umfasst.

## Claims

1. A latch (11) for a closing lock (9) of a gate (5), the gate (5) being able to adopt a closed position relative to a barrier frame (3) and to pivot on a first side (4) or on a second side (6) of the barrier frame (3) from the closed position,
the latch (11) comprising:
- a locking member (25) intended to cooperate with a bolt (13) to retain the gate (5) in the closed position,
- an obstacle (27) movable between a first extreme position and a second extreme position, in which positions the obstacle (27) is configured to free access to the locking member (25) from the first or the second side (4, 6) of the barrier frame (3) respectively,
**characterized in that** it comprises at least one guide aperture (43, 45), defining a path of displacement of the obstacle (27) between the first extreme position and the second extreme position.

2. The latch according to claim 1, wherein the locking member (25) includes a first and a second locking edge (29a, 29b) intended to retain the bolt (13) in a locked position,
in the first extreme position, the obstacle (27) being sufficiently away from the second locking edge (29b) to free access to the locking member (25) from the first side (4, 6) of the barrier frame (3), and
in the second extreme position, the obstacle (27) being sufficiently away from the first locking edge (29a) to free access to the locking member (25) from the second side (4, 6) of the barrier frame (3).

3. The latch according to any of claims 1 or 2, comprising a first access ramp (31) on the first side (4) of the barrier frame (3) and a second access ramp (33) on the second side (6) of the barrier frame (3), the first and second access ramps (31, 33) being configured to allow access to the locking member (25).

4. The latch according to any one of claims 1 to 3, wherein the obstacle (27) comprises a rod (35) extending along a transverse, and preferably perpendicular, direction relative to a plane of the at least one guide lumen (43, 45).

5. The latch according to claim 4, wherein the obstacle (27) comprises at least one retaining element (47, 49) configured to retain the rod (35) passing through the at least one guide aperture (43, 45).

6. A closing lock (9) of a gate (5), the gate (5) being able to adopt a closed position relative to a barrier frame (3) and to pivot on a first side (4) or on a second side (6) of the barrier frame (3) from the closed position,
the closing lock (9) comprising:
- a latch (11) according to any one of claims 1 to 5;
- a bolt (13) configured to cooperate with the latch (11) to retain the gate (5) in the closed position, the bolt (13) being configured to urge the obstacle (27) towards the first or the second extreme position so as to free access to the locking member (25) from the first or the second side (4, 6) of the barrier frame (3) respectively.

7. The closing lock according to claim 6, wherein the bolt (13) comprises a movable element (15), able to occupy a deployed position and a retracted position, the bolt (13) further comprising a return element (17) configured to return the movable element (15) towards the deployed position, so as to lock the gate (5) in the closed position when the bolt (13) reaches the locking member (25).

8. The closing lock according to claim 7, wherein the movable element (15) is configured to slide along the first or the second access ramp (31, 33) of the latch (11), thus moving from the deployed position to the retracted position when the gate (5) approaches the closed position.

9. A barrier (1) comprising a barrier frame (3) and a gate (5), the gate (5) being able to adopt a closed position relative to a barrier frame (3) and to pivot on a first side (4) or on a second side (6) of the barrier frame (3) from the closed position, the barrier comprising a closing lock (9) of the gate (5) according to any one of claims 6 to 8.
